# EUROPÄISCHE PATENTANMELDUNG

(11) **EP 3 832 267 A2**
(43) Veröffentlichungstag der Anmeldung: **09.06.2021**
(21) Anmeldenummer: 20208845.6
(22) Anmeldetag: 20.11.2020
(51) Int. Cl.: G01F 1/708, G01F 1/704, G01F 15/00

(54) **LUFTFÖRDERVORRICHTUNG MIT EINER LAUFZEITMESSUNG**

(30) Priorität: 02.12.2019 DE 102019132587
(71) Anmelder: ebm-papst Landshut GmbH, 84030 Landshut (DE)
(72) Erfinder: Simon, Bernhard, 93059 Regensburg (DE)
(74) Vertreter: Staeger & Sperling Partnerschaftsgesellschaft mbB

(57) **Zusammenfassung**

Die Erfindung betrifft eine Luftfördervorrichtung mit einem Strömungskanal (5) und einem Gebläse (2) zur Erzeugung eines Luftvolumenstroms durch den Strömungskanal (5), wobei an dem Strömungskanal (5) an einer ersten Position (P1) eine Vorrichtung zur Änderung der Temperatur oder der Zusammensetzung des von dem Gebläse (2) geförderten Luftvolumenstroms und an einer zweiten Position (P2), welche gegenüber der ersten Position (P1) stromabwärts im Strömungskanal (5) liegt, eine Messvorrichtung zur Erfassung der Änderung der Temperatur oder der Zusammensetzung des Luftvolumenstroms vorgesehen ist, wobei die Luftfördervorrichtung (1) ferner einen Zeitmesser umfasst, mit dem eine Laufzeit eines Luftvolumenelements des Luftvolumenstroms, welches die Änderung der Temperatur oder der Zusammensetzung aufweist von der ersten Position (P1) zur zweiten Position (P2) messbar ist, welche zum Luftvolumenstrom kalibriert oder relativ betrachtet wird.

## Beschreibung

Die Erfindung betrifft eine Luftfördervorrichtung mit einem Strömungskanal und einem Gebläse zur Erzeugung eines Luftvolumenstroms durch den Strömungskanal, wobei die Strömungsgeschwindigkeit des Luftvolumenstromes bestimmbar ist.

Aus dem Stand der Technik ist eine Vielzahl von technischen Lösungen zur Bestimmung des Volumenstroms in einem Lüftungssystem bekannt. Beispielsweise wird der Druckverlust über eine Messblende bestimmt oder der von dem Gebläse erzeugte Luftvolumenstrom wird über ein Flügelradanemometer gemessen.

Die Volumenstrombestimmung ist in vielen Anwendungsgebieten nötig oder zumindest vorteilhaft, insbesondere bei der Überwachung von Gebäudebelüftungen, bei der sich der einzuhaltende Volumenstrom gemäß der entsprechenden Norm um einen festgelegten Wert ändern darf. Jedoch auch in Anwendungen der Filterüberwachung bei Klimaanlagen, der Leckageerkennung in raumlufttechnischen Anlagen, sog. RLT-Anlagen, bei der Plausibilisierung von Volumenstromsensoren oder bei der Erkennung von technischen Fehlern an dem Gebläse wird eine Bestimmung des Volumenstroms benötigt.

Der Erfindung liegt deshalb die Aufgabe zugrunde, eine Luftfördervorrichtung und ein Verfahren zur Bestimmung der Strömungsgeschwindigkeit des von einem Gebläse erzeugten Volumenstroms in einem Strömungskanal bereitzustellen.

Diese Aufgabe wird durch die Merkmalskombination gemäß Anspruch 1 und Anspruch 10 gelöst.

Erfindungsgemäß wird eine Luftfördervorrichtung mit einem Strömungskanal und einem Gebläse zur Erzeugung eines Luftvolumenstroms durch den Strömungskanal vorgeschlagen, wobei an dem Strömungskanal an einer ersten Position eine Vorrichtung zur Änderung der Temperatur oder der Zusammensetzung des von dem Gebläse geförderten Luftvolumenstroms und an einer zweiten Position, welche gegenüber der ersten Position stromabwärts im Strömungskanal liegt, eine Messvorrichtung zur Erfassung der Änderung der Temperatur oder der Zusammensetzung des Luftvolumenstroms vorgesehen ist. Die Luftfördervorrichtung umfasst ferner einen Zeitmesser, mit dem eine Laufzeit eines Luftvolumenelements des Luftvolumenstroms, welches die Änderung der Temperatur oder der Zusammensetzung aufweist, von der ersten zur zweiten Position messbar ist. Dabei wird der Zeitpunkt der Änderung der Temperatur oder der Zusammensetzung des von dem Gebläse geförderten Luftvolumenstroms erfasst und über die stromabwärts positionierte Messvorrichtung erkannt, wann der Volumenstrom mit geänderter Temperatur oder Zusammensetzung die zweite Position im Strömungskanal erreicht. Bei definierter und somit bekannter Strecke zwischen der ersten Position und der zweiten Position lässt sich die Strömungsgeschwindigkeit des Luftvolumenelements des Volumenstroms (Strömungsgeschwindigkeit= Strömungsstrecke/Laufzeit) berechnen. Der Zusammenhang aus Strömungsstrecke/Laufzeit kann entweder bei der Inbetriebnahme der die Strömungsstrecke bereitstellenden Anlage kalibriert werden oder es werden nur relative Änderungen der Laufzeit betrachtet und im Betrieb bewertet. Im Gegensatz zur Messung über Messblenden ergibt sich kein zusätzlicher Druckverlust. Gegenüber Lösungen beispielsweise mit mechanischen bewegten Bauteilen wie Flügelrädern bleibt die Strömung vorteilhafterweise unbeeinflusst oder im Wesentlichen unbeeinflusst. Auch ist die Messung unanfällig gegenüber Verschmutzungen bei den dafür eingesetzten Komponenten.

Eine bevorzugte Ausführung des Verfahrens sieht vor, dass die Laufzeit des Luftvolumenstroms von der ersten zur zweiten Position, beispielsweise über eine Änderung der Temperatur oder der Zusammensetzung des Luftvolumenstroms kalibriert wird, um einen Sollwert der Laufzeit festzulegen, mit dem der gemessene Wert der Laufzeit verglichen wird. Bei RLT-Anlagen ist zur Inbetriebnahme gemäß der zugehörigen DIN EN 12599:2013-01, D1.2.2 ohnehin eine entsprechende Volumenstrommessung erforderlich. Diese kann zur Kalibrierung des Luftvolumenstroms als Standardwert und mithin als Vergleichswert bzw. Sollwert genutzt werden.

In einer ersten Ausführungsvariante sieht die Luftfördervorrichtung vor, dass die Vorrichtung zur Änderung der Temperatur als in dem Strömungskanal angeordneter Wärmetauscher ausgebildet ist. Der Wärmetauscher kann dabei auch durch eine elektrische Heizung realisiert sein. Über den Wärmetauscher ist eine kurzfristige Erhöhung oder eine beispielsweise durch Sprung, Stoß oder Modulation zeitlich veränderliche Variation der Temperatur des geförderten Luftvolumenstroms möglich. Die Position des Wärmetauschers im Strömungskanal repräsentiert dann die erste Position. Die Messvorrichtung an der zweiten Position stromabwärts ist als Temperatursensor ausgebildet, um die Temperaturänderung zu messen. Soweit die Dynamik des Wärmetauschers nicht ausreicht, um ein Signal zeitlich exakt in die Strömung einzubringen, kann in einer Weiterbildung mindestens ein weiterer Temperatursensor stromabwärts des Wärmetauschers eingesetzt werden, wobei die Laufzeit zwischen den beiden Temperatursensoren gemessen wird.

In einer alternativen Ausführung ist die Luftfördervorrichtung dadurch gekennzeichnet, dass die Vorrichtung zur Änderung der Zusammensetzung des von dem Gebläse geförderten Luftvolumenstroms als ein Luftbefeuchter ausgebildet ist, mit welchem dem Luftvolumenstrom eine definierte Wassermenge zeitlich veränderlich zuführbar ist, beispielsweise durch Sprung, Stoß oder Modulation. Entsprechende Luftbefeuchter sind häufig bei Klimaanlagen vorgesehen. Die Stelle der Einbringung der Wassermenge in den Luftvolumenstrom im Strömungskanal repräsentiert bei dieser Ausführung die erste Position. Die Messvorrichtung an der zweiten Position stromabwärts ist beispielsweise als Hygrometer (Luftfeuchtesensor) ausgebildet, um die Änderung der Luftfeuchte im Luftvolumenstrom zu messen. Sobald die Änderung der Luftfeuchte an dem Hygrometer an der zweiten stromabwärtigen Position detektiert wird, kann aus der Laufzeit und der definierten, bekannten Strömungsstrecke im Strömungskanal die Strömungsgeschwindigkeit des Luftvolumenelements, welches die Änderung der Luftfeuchte aufweist, berechnet werden. Als Basis kann hierzu die vorstehend beschriebene Kalibration bei Inbetriebnahme der Anlage genutzt oder die relative Änderung der Laufzeit gemessen werden.

Bei einer weiteren alternativen Ausführung der Luftfördervorrichtung ist die Vorrichtung zur Änderung der Zusammensetzung des von dem Gebläse geförderten Luftvolumenstroms als eine Gaszuführung ausgebildet, mit welcher dem Luftvolumenstrom ein Tracergas zuführbar ist. Tracergase werden auch als Spurengase oder Indikatorgase bezeichnet. Als Tracergas wird beispielsweise O₂, N₂ oder CO₂ verwendet. Die Messvorrichtung an der zweiten Position stromabwärts ist als Gassensor ausgebildet, um die Änderung der Zusammensetzung der Gase bzw. der Gasanteile des geförderten Volumenstroms zu messen. Über die Gaszuführung wird das Tracergas an der ersten Position in den Luftvolumenstrom eingebracht. Sobald es an dem Gassensor an der zweiten stromabwärtigen Position detektiert wird, kann auch bei dieser Ausführung aus der Laufzeit und der definierten, bekannten Strömungsstrecke im Strömungskanal die Strömungsgeschwindigkeit des Luftvolumenelements des Luftvolumenstroms, welches das Tracergas enthält, berechnet werden. Als Basis kann auch hierzu die Kalibration bei Inbetriebnahme der Anlage genutzt oder die relative Änderung der Laufzeit gemessen werden.

Eine Weiterbildung der vorstehenden Ausführung sieht zudem vor, dass die Luftfördervorrichtung ferner ein Ventil zur zeitlich veränderlichen und optional mengendefinierten Zuführung des Tracergases in den Luftvolumenstrom umfasst, wobei das Ventil in das Gebläse integriert ist. Die erste Position ist somit durch das Gebläse selbst bestimmt.

Die Luftfördervorrichtung ist ferner in einer Weiterbildung dadurch gekennzeichnet, dass das Gebläse eine Steuerung aufweist, welche eine Gebläsedrehzahl des Gebläses regelt und eine Ventilstellung des Ventils zur Einbringung des Tracergases steuert. Insbesondere ist dabei eine Ausführung vorteilhaft, bei der das Gebläse der Luftfördervorrichtung eine Gebläseelektronik zur Regelung des Gebläses und eine in die Gebläseelektronik integrierte Auswertungselektronik zur Auswertung eines Messergebnisses der Laufzeit des Luftvolumenstromes zwischen der ersten und der zweiten Position umfasst. Die Gebläseelektronik beinhaltet einen Mikrokontroller zur bedarfsgerechten Regelung der Gebläsedrehzahl. Dieser Mikrokontroller kann als Auswertungselektronik für die Laufzeitbestimmung genutzt werden. Zudem können die an das Gebläse angeschlossenen BUS-Systeme verwendet werden, um die Signale der Sensoren an die Auswertungselektronik zurückzuführen und die Laufzeit bzw. Strömungszeit zwischen der ersten und der zweiten Position zu bestimmen.

Als Gebäse können Axialgebläse oder Radialgebläse verwendet werden. Für eine Einleitung von Tracergas in den Strömungsweg kann beispielsweise die Motoraufhängung des Gebläsemotors mit Löchern versehen sein.

Wie vorstehend beschrieben ist die Messvorrichtung zur Erfassung der Änderung der Temperatur oder der Zusammensetzung des Luftvolumenstroms je nach Anwendung als Temperatursensor, Luftfeuchtesensor oder Gassensor ausgebildet. Die Sensoren können drahtgebunden oder drahtlos beispielsweise über Funk oder ein Datennetz (5G) mit der Auswertungselektronik verbunden sein.

Grundsätzlich ist bei der Luftfördervorrichtung vorteilhaft, dass die Vorrichtung zur Änderung der Temperatur oder der Zusammensetzung des von dem Gebläse geförderten Luftvolumenstroms an der ersten Position unmittelbar an die Messvorrichtung zur Erfassung der Änderung der Temperatur oder der Zusammensetzung des Luftvolumenstroms anschließt, ohne dass weitere Bauteile oder Komponenten im Strömungskanal vorgesehen sind, welche die Temperatur oder der Zusammensetzung des Luftvolumenstroms zwischen der ersten und zweiten Position beeinflussen. Die Temperatur oder Zusammensetzung des Luftvolumenstroms bleibt somit von weiteren Einflussgrößen unbeeinflusst.

Ein weiterer Aspekt der Erfindung ist das Verfahren zur Messung der Laufzeit des Luftvolumenstroms von der ersten zur zweiten Position in einer Luftfördervorrichtung gemäß der vorstehend beschriebenen Ausführungsvarianten. An dem Strömungskanal erfolgt an der ersten Position über die Vorrichtung zur Änderung der Temperatur oder der Zusammensetzung des von dem Gebläse geförderten Luftvolumenstroms eine Änderung der Temperatur oder der Zusammensetzung des von dem Gebläse geförderten Luftvolumenstroms, welche an der zweiten Position über die Messvorrichtung zur Erfassung der Änderung der Temperatur oder der Zusammensetzung des Luftvolumenstroms erfasst wird. Durch den Zeitmesser wird die Laufzeit des Luftvolumenstroms von der ersten zur zweiten Position gemessen, indem ein Zeitraum von der Änderung der Temperatur oder der Zusammensetzung des von dem Gebläse geförderten Luftvolumenstroms an der ersten Position bis zur Erfassung der Änderung der Temperatur oder der Zusammensetzung des von dem Gebläse geförderten Luftvolumenstroms an der zweiten Position durch die Messvorrichtung gemessen wird. Aus der Laufzeit und der definierten Strömungsstrecke wird die Strömungsgeschwindigkeit des Luftvolumenelements des Luftvolumenstroms, welches die Änderung der Temperatur oder der Zusammensetzung aufweist, berechnet. Als Basis kann auch hierzu die Kalibration bei Inbetriebnahme der Anlage genutzt oder die relative Änderung betrachtet werden.

Das Verfahren wird vorzugsweise diskontinuierlich und/oder bei Bedarf durchgeführt.

Ferner ist für das Verfahren vorgesehen, dass das Gebläse zumindest in einem Zeitraum der Messung einen konstanten Luftvolumenstrom fördert.

Als weitere Vorteile ergeben sich, dass mit der Laufzeitmessung nicht nur der Volumenstrom bestimmt, sondern auch die Funktionalität von Volumenstromsensoren im System überprüft werden kann. Auch kann aus der Laufzeitmessung indirekt auf weitere Fehler im System geschlossen werden, insbesondere Fehler am Gebläse durch eine Plausibilisierung der Drehzahl. Jedoch können auch zugesetzte Filter erkannt werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Darstellung einer Luftfördervorrichtung in einer ersten Ausführungsvariante,
- Fig. 2: eine schematische Darstellung einer Luftfördervorrichtung in einer zweiten Ausführungsvariante,
- Fig. 3: eine schematische Darstellung einer Luftfördervorrichtung in einer Modifikation der zweiten Ausführungsvariante,
- Fig. 4: ein Diagramm zur Darstellung der Sensorsignale.

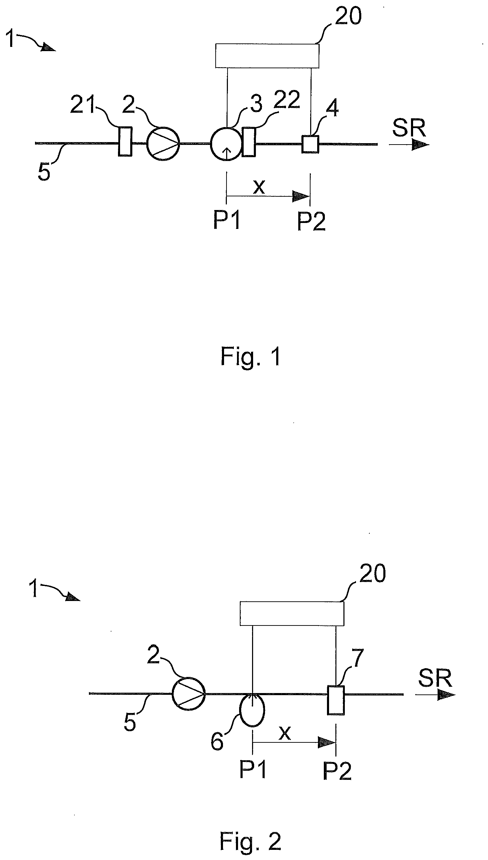

In Figur 1 ist eine Luftfördervorrichtung 1 in einer ersten Ausführungsvariante schematisch mit einem Strömungskanal 5, einem Gebläse 2 zur Erzeugung des Luftvolumenstroms durch den Strömungskanal 5, einem Wärmetauscher 3 und einem Temperatursensor 4 dargestellt. Zudem sind für den Wärmetauscher 3 ein zusätzlicher Temperatursensor 22 und ein weiterer optionaler Temperatursensor 21 vor dem Gebläse 2 angedeutet. Das Gebläse 2 fördert den Luftvolumenstrom durch den Strömungskanal 5 bedarfsgerecht über Variation der Gebläsedrehzahl. Zur Messung der Laufzeit des Luftvolumenelements des Luftvolumenstroms, welches die Änderung der Temperatur aufweist, wird die Gebläsedrehzahl konstant gehalten und an der ersten Position P1 über den Wärmetauscher 3 kurzzeitig die Temperatur des Luftvolumenstroms erhöht. In Strömungsrichtung SR gesehen stromabwärts erreicht der Luftvolumenstrom mit erhöhter Temperatur an der zweiten Position P2 den Temperatursensor 4 nach einem Weg x. Der Wärmetauscher 3 und der Temperatursensor 4 grenzen unbeeinflusst von weiteren Komponenten im Strömungskanal 5 aneinander an, so dass der Luftvolumenstrom zwischen der ersten Position P1 und der zweiten Position P2 ausschließlich durch den Wärmetauscher 3 beeinflusst wird. Der Temperatursensor 22 wird am Wärmetauscher 3 verwendet, da die Dynamik des Wärmetauschers 3 in der Praxis nicht ausreichend kann. Die zwischen den Positionen P1 und P2 benötigte Laufzeit t wird über eine Auswertungselektronik 20 erfasst, die als Zeitmesser dient. Aus dem Weg x und der Laufzeit t wird die Strömungsgeschwindigkeit des Luftvolumenelements des Luftvolumenstroms, welches die Änderung der Temperatur oder der Zusammensetzung aufweist, berechnet. Der zusätzliche optionale Temperatursensor 21 wird verwendet, um eine falsche Korrelation zu vermeiden, beispielsweise wenn die Ansaugtemperatur des Gebläses 2 im Strömungskanal schwankt.

In Figur 2 ist eine zweite Ausführungsvariante der Luftfördervorrichtung 1 dargestellt, die sich gegenüber der Ausführung nach Figur 1 dadurch unterscheidet, dass anstelle eines Wärmetauschers eine Gaszuführung 6 zur Zuführung eines Tracergases in den Luftvolumenstrom im Strömungskanal 5 vorgesehen wird. Zur Messung der Laufzeit des Luftvolumenstroms wird die Gebläsedrehzahl auch in dieser Ausführung konstant gehalten und an der ersten Position P1 über das Ventil 6 das Tracergas, beispielsweise O₂, N₂ oder CO₂, in den Luftvolumenstrom eingebracht. In Strömungsrichtung SR gesehen stromabwärts erreicht der Luftvolumenstrom mit geänderter Zusammensetzung gebildet aus Luft und Tracergas an der zweiten Position P2 den Gassensor 7 nach dem Weg x. Wie in der Ausführung gemäß Figur 1 wird die hierfür benötigte Laufzeit t über eine Auswertungselektronik 20 erfasst, die als Zeitmesser dient. Die Strömungsgeschwindigkeit des Luftvolumenelements des Luftvolumenstroms mit dem Tracergas wird aus der Division der Strömungsstrecke x und der Laufzeit t berechnet.

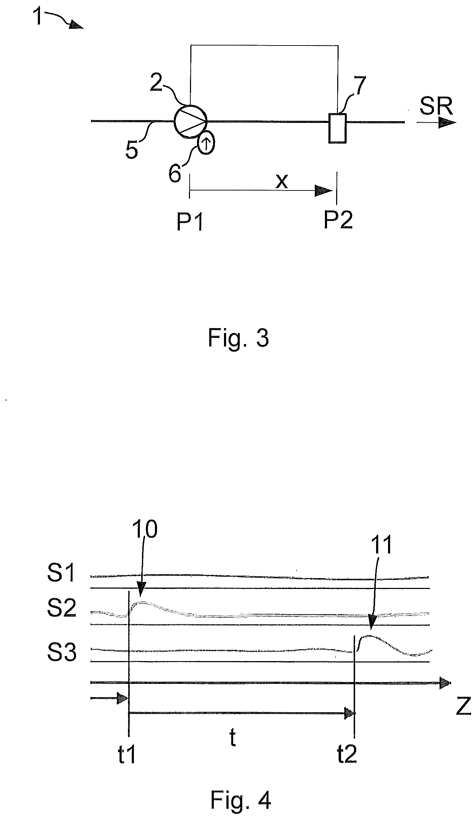

Die Ausführung gemäß Figur 3 stimmt mit derjenigen aus Figur 2 überein, jedoch ist die Gaszuführung 6 als Ventil in das Gebläse 2 integriert. Als Auswertungselektronik und Zeitmesser wird die Gebläseelektronik, insbesondere der Mikrokontroller der Elektronik des Gebläses 2 verwendet. Die Position P1 entspricht der Gebläseposition im Strömungskanal 5. Die Auswertung und Bestimmung der Strömungsgeschwindigkeit des Luftvolumenelements des Luftvolumenstroms erfolgt im Gebläse 2. Die Regelung des Gebläses 2 kann diesen Wert unmittelbar als Einflussgröße bei der Regelung der Gebläsedrehzahl verarbeiten.

Gemäß Figur 2 ist mit dem Bezugszeichen 6 eine Gaszuführung dargestellt. Diese kann jedoch auch als Luftbefeuchter ausgebildet sein, mit dessen Hilfe dem Luftvolumenstrom Wasser zugesetzt wird. Dann wird als Sensor kein Gassensor, sondern ein Luftfeuchtesensor eingesetzt. Im Übrigen ist die Ausführung identisch.

Bezugnehmend auf Figur 4 ist die Änderung der Sensorsignale über der Zeitachse Z dargestellt. Das Signal S1 entspricht beispielsweise der gemessene Temperatur des Luftvolumenstroms, d.h. beispielsweise in Figur 1 vor dem Wärmetauscher 3 über den Temperatursensor 21. Das Signal S2 zeigt die Änderung des Signalwerts 10 ausgelöst an der Position P1, das Signal S3 die Änderung des Signalwerts 11 ausgelöst an der Position P2. Gemäß der Ausführung nach Figur 1 erfolgt die Änderung des Signalwerts durch eine Änderung der Temperatur (oder in der vorstehend beschriebenen alternativen Ausführung der Luftfeuchte) des Luftvolumenstroms, gemäß der Ausführung nach den Figuren 2 und 3 durch eine Änderung der Zusammensetzung des Luftvolumenstroms gebildet aus Luft und dem Tracergas. Dargestellt ist ferner die Zeit t von t1 bis t2, welche das Luftvolumenelement benötigt, um von der Position P1 zur Position P2 zu strömen. Aus der Zeit t wird über die Strömungsstrecke x die Strömungsgeschwindigkeit des Luftvolumenelements des Luftvolumenstroms berechnet. Der Zeitraum der Messung beginnt am Anfang der Zeitachse Z und endet nach der Detektion der Änderung der Zusammensetzung des Luftvolumenstroms und Berechnung der Laufzeit.

## Patentansprüche

1. Luftfördervorrichtung mit einem Strömungskanal (5) und einem Gebläse (2) zur Erzeugung eines Luftvolumenstroms durch den Strömungskanal (5), wobei an dem Strömungskanal (5) an einer ersten Position (P1) eine Vorrichtung zur Änderung der Temperatur oder der Zusammensetzung des von dem Gebläse (2) geförderten Luftvolumenstroms und an einer zweiten Position (P2), welche gegenüber der ersten Position (P1) stromabwärts im Strömungskanal (5) liegt, eine Messvorrichtung zur Erfassung der Änderung der Temperatur oder der Zusammensetzung des Luftvolumenstroms vorgesehen ist, wobei die Luftfördervorrichtung (1) ferner einen Zeitmesser umfasst, mit dem eine Laufzeit eines Luftvolumenelements des Luftvolumenstroms, welches die Änderung der Temperatur oder der Zusammensetzung aufweist, von der ersten Position (P1) zur zweiten Position (P2) messbar ist.

2. Luftfördervorrichtung nach Anspruch 1, **dadurch gekennzeichnet, dass** die Vorrichtung zur Änderung der Temperatur als in dem Strömungskanal (5) angeordneter Wärmetauscher (3) ausgebildet ist.

3. Luftfördervorrichtung nach Anspruch 1, **dadurch gekennzeichnet, dass** die Vorrichtung zur Änderung der Zusammensetzung des von dem Gebläse (2) geförderten Luftvolumenstroms als ein Luftbefeuchter ausgebildet ist, mit welchem dem Luftvolumenstrom eine definierte Wassermenge zuführbar ist.

4. Luftfördervorrichtung nach Anspruch 1, **dadurch gekennzeichnet, dass** die Vorrichtung zur Änderung der Zusammensetzung des von dem Gebläse (2) geförderten Luftvolumenstroms als eine Gaszuführung (6) ausgebildet ist, mit welcher dem Luftvolumenstrom ein Tracergas zuführbar ist.

5. Luftfördervorrichtung nach dem vorigen Anspruch, ferner umfassend ein Ventil als Gaszuführung (6) zur zeitdefinierten und mengendefinierten Zuführung des Tracergases in den Luftvolumenstrom, wobei das Ventil in das Gebläse (2) integriert ist.

6. Luftfördervorrichtung nach dem vorigen Anspruch, **dadurch gekennzeichnet, dass** das Gebläse (2) eine Steuerung/Regelung aufweist, welche eine Gebläsedrehzahl des Gebläses (2) regelt und eine Ventilstellung des Ventils steuert.

7. Luftfördervorrichtung nach einem der vorigen Ansprüche, ferner umfassend eine Gebläseelektronik zur Steuerung des Gebläse (2) und eine in die Gebläseelektronik integrierte Auswertungselektronik zur Auswertung eines Messergebnisses der Laufzeit (t) des Luftvolumenstromes zwischen der ersten und der zweiten Position (P1, P2).

8. Luftfördervorrichtung nach einem der vorigen Ansprüche, **dadurch gekennzeichnet, dass** die Messvorrichtung zur Erfassung der Änderung der Temperatur oder der Zusammensetzung des Luftvolumenstroms als Temperatursensor (4), Luftfeuchtesensor oder Gassensor (7) ausgebildet ist.

9. Luftfördervorrichtung nach einem der vorigen Ansprüche, **dadurch gekennzeichnet, dass** die Vorrichtung zur Änderung der Temperatur oder der Zusammensetzung des von dem Gebläse (2) geförderten Luftvolumenstroms an der ersten Position (P1) an die Messvorrichtung zur Erfassung der Änderung der Temperatur oder der Zusammensetzung des Luftvolumenstroms anschließt, ohne dass weitere Bauteile oder Komponenten im Strömungskanal (5) vorgesehen sind, welche die Temperatur oder der Zusammensetzung des Luftvolumenstroms zwischen der ersten und zweiten Position (P1, P2) beeinflussen.

10. Verfahren zur Messung der Laufzeit des Luftvolumenstroms von der ersten zur zweiten Position (P1, P2) in einer Luftfördervorrichtung (1) nach einem der vorigen Ansprüche, wobei an dem Strömungskanal (5) an der ersten Position über die Vorrichtung zur Änderung der Temperatur oder der Zusammensetzung des von dem Gebläse (2) geförderten Luftvolumenstroms eine Änderung der Temperatur oder der Zusammensetzung des von dem Gebläse (2) geförderten Luftvolumenstroms erfolgt, welche an der zweiten Position (P2) über die Messvorrichtung zur Erfassung der Änderung der Temperatur oder der Zusammensetzung des Luftvolumenstroms erfasst wird, und wobei durch den Zeitmesser die Laufzeit des Luftvolumenstroms von der ersten Position (P1) zur zweiten Position (P2) gemessenen wird, indem ein Zeitraum von der Änderung der Temperatur oder der Zusammensetzung des von dem Gebläse (2) geförderten Luftvolumenstroms an der ersten Position bis zur Erfassung der Änderung der Temperatur oder der Zusammensetzung des von dem Gebläse (2) geförderten Luftvolumenstroms an der zweiten Position durch die Messvorrichtung gemessen wird.

11. Verfahren nach dem vorigen Anspruch, **dadurch gekennzeichnet, dass** es diskontinuierlich durchgeführt wird.

12. Verfahren nach Anspruch 10 oder 11, **dadurch gekennzeichnet, dass** das Gebläse (2) zumindest in einem Zeitraum der Messung einen konstanten Luftvolumenstrom fördert.

13. Verfahren nach einem der vorigen Ansprüche 10 bis 12, **dadurch gekennzeichnet, dass** die Laufzeit (t) des Luftvolumenstroms von der ersten zur zweiten Position (P1, P2) zunächst unbeeinflusst von der Änderung der Temperatur oder der Zusammensetzung des Luftvolumenstroms kalibriert wird, um einen Sollwert der Laufzeit festzulegen, mit dem der gemessene Wert der Laufzeit (t) verglichen wird.

14. Verfahren nach einem der vorigen Ansprüche 10 bis 13, **dadurch gekennzeichnet, dass** der Luftvolumenstrom zwischen der ersten Position (P1) und der zweiten Position (P2) durch den Strömungskanal unbeeinflusst von Komponenten oder Bauteilen strömt, welche die Temperatur oder die Zusammensetzung des Luftvolumenstroms verändern.
